# EUROPEAN PATENT APPLICATION

(11) **EP 0 779 020 A1**
(43) Date of publication of application: **18.06.1997**
(21) Application number: 96610049.7
(22) Date of filing: 12.12.1996
(51) Int. Cl.: A01D 57/20

(54) **A towed mower with a transverse crop conveyor**

(30) Priority: 15.12.1995 DK 1423/95
(71) Applicant: JF-Fabriken - J. Freudendahl A/S, 6400 Sonderborg (DK)
(72) Inventor: Freudendahl, Jorn, 6400 Sonderborg (DK); Nielsen, Harald Raun, 6470 Sydals (DK)
(74) Representative: Indahl, Peter Jensen

(57) **Abstract**

The mower is of the type which comprises a centrally hinged (4) draw bar (3) for connection with a tractor, mowing means (2) which are adapted during operation to mow a crop in a windrower track of a certain width, and a conveyor (6) with a path of conveyance running transversely to the windrower track and during operation alternatingly placing the harvested crop (13) from a windrower track at one side of the same windrower track and to place the harvested crop (14) in the previously mowed windrower track near to or on top of harvested crop (13) already placed. Moreover, a shield (10) is provided and means for moving this shield (10) between a position, in which it stops crop (13) discharged from the conveyor (6), whereby the crop falls down onto the soil within the track of the mower, and a position, in which it is not in the way of the crop (14) discharged from the conveyor (6).

## Description

The present invention relates to a towed mower of the type comprising a draw bar which is hinged near the longitudinal centre plane of the mower relative to the working direction for connection with a tractor, mowing means which are adapted during operation to mow a crop in a windrower track of a certain width, and a conveyor with a path of conveyance running transversely to the windrower track for alternatingly during operation to place the windrow from a windrower track at one side of the same windrower track and to place the windrow in the previously mowed windrower track near to or on top of a windrow already laid out.

A mower of this type is known from US-A-4 590 751, which shows how it is possible with such a mower to harvest a field, the passes taking alternatingly place in one direction and the other, whereby the windrow during one field pass is placed within the windrower track at a distance from the crop not yet harvested, which distance is sufficient for leaving room for the wheels of one side of the tractor during the next field pass, and the windrow is during the subsequent pass laid out further at the same side of the mower as before to place the harvested crop from the second pass as close as possible to the windrow from the first pass.

When crop is thus discharged to the side of a conveyor, the crop will scatter over a certain area. This entails the problem that a part of the crop from a first field pass is placed within the windrower track, but too close to the crop not yet harvested, such that the tractor during the subsequent field pass partially runs in the windrow.

From DE-A-33 29 276 a lift-suspended mower is known which is provided with a transverse conveyor adapted to alternatingly run one way or the other, to alternatingly place the windrow at one side of the mower and at the other side thereof. A stationary shield is provided at each end of the conveyor for limiting the width of a laid out windrow.

The object of the present invention is to solve the above problem existing in connection with the prior art. It should in this connection be noted that it would not be desirable to provide the mower according to US-A-4 590 750 with a stationary limiting shield, as it is the aim during a second field pass to place the windrow as far as possible to the side of the mower.

The object of the invention is met by means of a towed mower which is characteristic in comprising a shield and means for moving this shield between a position, in which it stops crop discharged from the conveyor, whereby the crop falls down onto the soil within the track of the mower, and a position, in which it is not in the way of the crop discharged from the conveyor.

US-A-5 351 468 discloses a mower comprising a draw bar hinged to one side of the mower, a transverse conveyor and a movable shield at one end of the conveyor. The conveyor is driven alternatingly in one direction and the other, whereby the shield is correspondingly moved between a closed position, in which it leads material from the mower to the conveyor, and an open position, in which it is out of the way of material leaving the conveyor. In the open position the shield may possibly control the flow of material leaving the conveyor, but such an effect has not been mentioned in the publication and is not the object of the movement from a closed to an open position. On the contrary, the shield is moved from the closed position to the open position in order not to lead material from the conveyor back to the mower.

It is known from US-A-4 590 751 to displace the conveyor in its transport direction between subsequent field passes. In a preferred embodiment of this type, the means for moving the shield are according to the invention connected with the conveyor or with means for its displacement, such that the movements of the shield and the conveyor are synchronized. This connection may for instance be established mechanically or hydraulically.

In an embodiment, in which the connection is established hydraulically, the mower comprises double-acting hydraulic cylinders for swinging the draw bar, displacing the conveyor and moving the shield, respectively, and these hydraulic cylinders are connected in series. Hereby is attained that when the hydraulic cylinders are connected with a double-acting hydraulic power take-off on a tractor the conveyor and the shield are moved correctly relative to the positioning of the mower behind the tractor, the positioning being controlled by means of the oscillation of the draw bar.

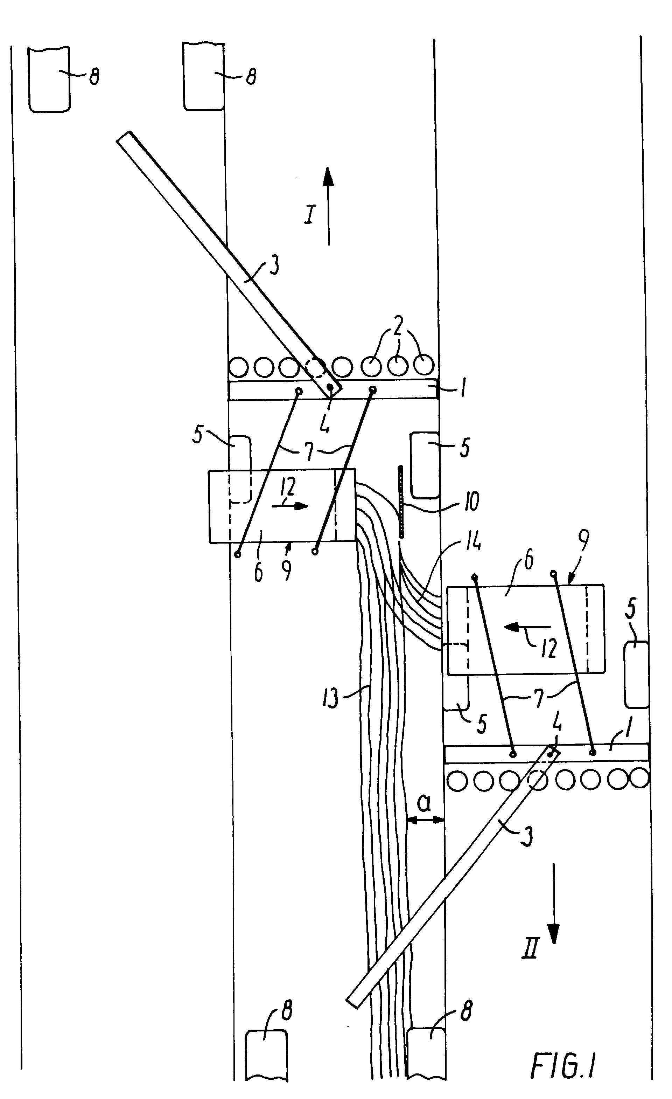

The invention will now be explained in detail in the following by means of an example of an embodiment with reference to the drawing, in which
Fig. 1 shows a mower according to the invention during two subsequent field passes,
Fig. 2 shows the mower from behind during the first pass, and
Fig. 3 shows the mower from behind during the second pass.

The figures show a mower with a frame 1, mowing means in form of cutter discs 2 and a draw bar 3 which is hinged at 4 to the frame 1 near its centre. Moreover, the mower is provided with driving wheels 5 and a transverse conveyor 6, which in this case is a conveyor belt and is suspended in the frame 1 by means of two parallelogram arms 7, whereby the conveyor 6 may be displaced in its transport direction.

The draw bar 4 is connected with a tractor, of which only the rear wheels 8 are shown, and the mower comprises further conditioning means and throwing means for leading harvested crop onto the conveyor 6.

Furthermore, a stationary shield 9 is provided behind the conveyor to prevent crop which is conveyed on the conveyer from falling out over the backward facing side edge of the conveyor.

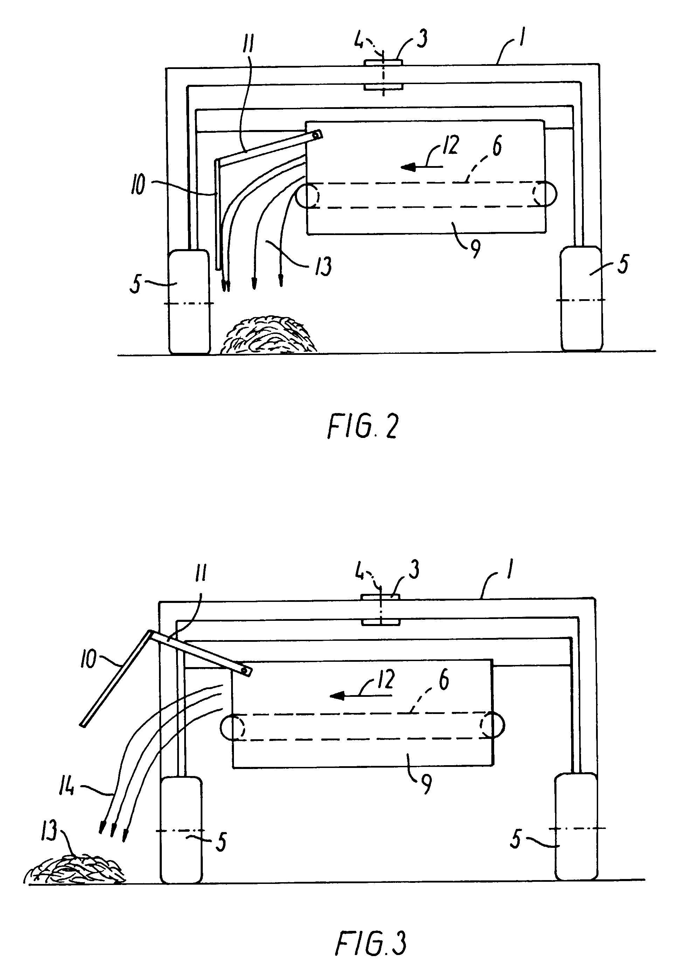

Finally, a movable shield 10 is provided which is fastened to a pivotable arm 11, by means of which it may be moved between two positions shown in Figs. 2 and 3, respectively.

Preferably, double-acting hydraulic cylinders are provided for swinging the draw bar 3, the parallelogram arms 7 and the arm 11, respectively, in order to move the draw bar 3, the conveyor 6 and the movable shield 10 respectively, between the positions shown in the figures. By connecting these hydraulic cylinders in series and with a double-acting hydraulic power take-off on the tractor, synchronous movements are achieved, such that the positions of the conveyor 6 and the shield 10 become dependent on the position of the draw bar 3.

The mower works in the following way:

During a field pass in a first direction (arrow I) the draw bar 3 and the conveyor 6 have been taken to the opposite side relative to the transport direction 12 of the conveyor 6. The shield 10 is in the position shown in Fig. 2 and ensures a certain distance a between the laid out windrow 13 and the crop not yet harvested. This distance a is sufficient for ensuring that the tractor during a subsequent pass may drive with its (in the embodiment left) wheel between the crop not harvested and the windrow 13 without driving in it.

During the subsequent field pass in the direction of arrow II, the draw bar 3 and the conveyor 6 are taken to the other side, and the shield 10 is lifted as shown in Fig. 3. Hereby is attained that the crop 14, which is now discharged from the conveyor, is thrown further out to the side and consequently brought quite near to the windrow 13 laid out previously.

## Claims

1. A towed mower of the type comprising a draw bar (3) which is hinged (4) near the longitudinal centre plane of the mower relative to the working direction for connection with a tractor, mowing means (2) which are adapted during operation to mow a crop in a windrower track of a certain width, and a conveyor (6) with a path of conveyance running transversely to the windrower track for alternatingly during operation to place the windrow (13) from a windrower track at one side of the same windrower track and to place the windrow (14) in the previously mowed windrower track near to or on top of the windrow (13) already laid out, **characterized** by a shield (10) and means for moving this shield (10) between a position, in which it stops crop (13) discharged from the conveyor (6), whereby the crop falls down onto the soil within the track of the mower, and a position, in which it is not in the way of the crop (14) discharged from the conveyor (6) .

2. A towed mower according to claim 1, **characterized** in that the conveyor (6) is displaceable in its transport direction (12) and in that means for moving the shield are connected with the conveyor (6) or with means for its displacement such that the movements of the shield (10) and the conveyor (6) are synchronized.

3. A towed mower according to claim 2, **characterized** in comprising double-acting hydraulic cylinders for swinging the draw bar (3), displacing the conveyor (6) and moving the shield (10), respectively, and in that these hydraulic cylinders are connected in series.
